# EUROPEAN PATENT APPLICATION

(11) **EP 0 522 655 A1**
(43) Date of publication of application: **13.01.1993**
(21) Application number: 92202069.8
(22) Date of filing: 06.07.1992
(51) Int. Cl.: C08L 13/02, C08C 19/00

(54) **Aqueous compositions**

(30) Priority: 12.07.1991 GB 9115054
(71) Applicant: FMC CORPORATION (UK) LIMITED, Manchester M17 1WT (GB)
(72) Inventor: Cole-Hamilton, David John, Fife, Scotland KY16 8PP (GB); Randell, Donald Richard, Stockport, Cheshire (GB); Clubley, Brian George, Wilmslow, Cheshire (GB)
(74) Representative: Hamilton, Raymond

(57) **Abstract**

Aqueous compositions suitable for use in scale inhibition, corrosion inhibition, dispersancy and protective treatment of wood comprise a solution in an aqueous medium of 1 to 500,000 ppm of a polymer containing carboxyl groups obtainable by subjecting unsaturated polymers to hydrocarboxylation, or to hydrocarboxylation and hydrogenation and/or hydroformylation and/or epoxidation.

## Description

### Aqueous Compositions

This invention relates to aqueous compositions containing polymers having functional groups on a carbon backbone. It also relates to the use of the aqueous compositions in scale inhibition, corrosion inhibition, dispersancy and the protective treatment of wood.

Polymers having functional groups on a carbon backbone have conventionally been produced by two general methods, namely i) by homopolymerising or colpolymerising monomers containing functional groups or ii) by modification of a polymer to introduce a functional group or change an existing one, often called post polymerisation chemical modification. In the first method, the position of the functional groups is determined and limited by the structures of the monomers and their reactivity, which in turn has a limiting effect on the properties of the properties of the polymers obtained. In the second method, conventional reactions on the polymers have been difficult to control, particularly with regard to selectivity or completeness of reaction.

Many reactions under homogeneous catalysis have been carried out on simple alkenes but, with the exception of hydrogenation, these reactions have rarely been performed on unsaturated polymers.

In accordance with the present invention polymers prepared by hydrocarboxylation of unsaturated polymers under homogeneous catalysis, particularly polymers containing carboxyl groups derived by hydrocarboxylation of pendant (non-backbone) carbon-carbon unsaturation, are useful in dilute aqueous compositions for a variety of applications, including scale inhibition, corrosion inhibition, coatings and the protective treatment of wood.

Accordingly, the present invention provides in one aspect an aqueous composition comprising a solution in an aqueous medium of 0.1 to 500,000 ppm by weight of a polymer of formula I 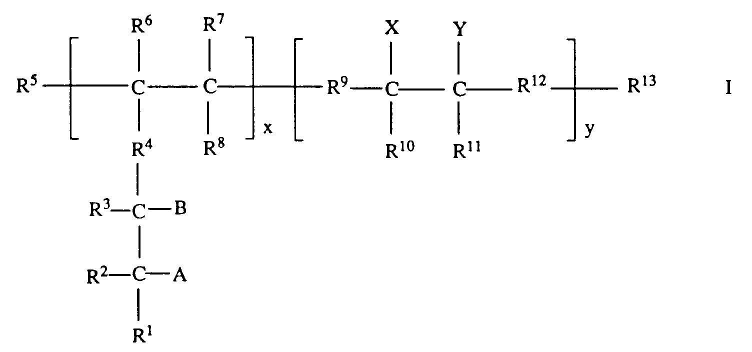
where R¹, R², R³, R⁵, R⁶, R⁷, R⁸, R¹⁰, R¹¹ and R¹³ each independently denote a hydrogen atom, C₁ to C₁₀ alkyl, phenyl, halogen, hydroxyl or a group -COOM;
R⁴ denotes a divalent group of formula II 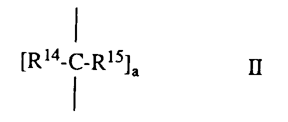
or a divalent cycloaliphatic or heterocyclic group of 3 to 10 carbon atoms:
R⁹ denotes a divalent group of formula III 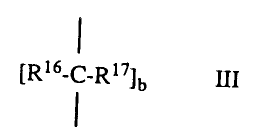
or a divalent cycloaliphatic or heterocyclic group of 3 to 10 carbon atoms;
R¹² denotes a divalent group of formula IV 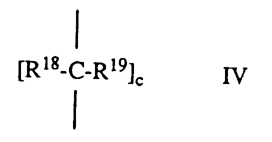
or a divalent cycloaliphatic or heterocyclic group of 3 to 10 carbon atoms;
R¹⁴, R¹⁵, R¹⁶, R¹⁷, R¹⁸ and R¹⁹ each independently denote a hydrogen atom, C₁ to C₁₀ alkyl, phenyl, halogen, hydroxyl, a group -COOM, C₁ to C₁₀ alkoxycarbonyl, C₁ to C₁₀ hydroxyalkoxycarbonyl or C₁ to C₁₀ alkylcarbonyloxy; or R¹⁴ and R¹⁵ alternatively each independently denote phenyl; one of A and B denotes a hydrogen atom and the other denotes a hydrogen atom, -COOM or -CHO or A and B together with an oxygen atom form an epoxide ring or A and B together denote a single bond; one of X and Y denotes a hydrogen atom and the other denotes a hydrogen atom, -COOM or -CHO or X and Y together with an oxygen atom form an epoxide ring or X and Y together denote a single bond; M denotes a hydrogen atom, an alkali metal ion, an ammonium ion or an amine ion; a, b and c are the same or different and are each integers from 0 to 10; and x and y are the same or different and are each integers from 0 to 50,000, such that x + y is at least 3; with the proviso that the polymer contains at least one group -COOM and is not a homopolymer of acrylic acid or methacrylic acid or a copolymer of acrylic acid or methacrylic acid with an ethylenically unsaturated monomer.

The atoms or groups R¹ to R³, R⁵ to R⁸ and R¹⁰ to R¹⁹ may be the same or different. Where one or more of them denote or contain alkyl or hydroxyalkyl groups, these groups preferably have 1 to 8 carbon atoms and may be methyl, ethyl, n-propyl, isopropyl, n-butyl, isobutyl, tert-butyl, n-pentyl, neopentyl, n-hexyl, n-heptyl, isoheptyl, n-octyl or 2-ethyl hexyl groups or, for R¹⁴ to R¹⁹ such alkyl groups substituted by a hydroxyl group. Preferably, R¹ to R³, R⁵ to R⁸ and R¹⁰ to R¹³ denote hydrogen, methyl, phenyl, hydroxyl or -COOM and R¹⁴ to R¹⁹ denote hydrogen, methyl, phenyl, -COOM, methoxycarbonyl, ethoxycarbonyl, n-butyoxycarbonyl, 2-ethylhexyloxycarbonyl or methylcarbonyloxy.

The divalent groups R⁴, R⁹ and R¹² may be the same or different. When they denote a cycloaliphatic group they may be cycloalkylene, preferably of 5 to 8 carbon atoms, for example cyclopentylene, methylcyclopentylene, 1,1-dimethylcyclopentylene and 1,2-dimethylcyclopentylene. When these divalent groups denote a heterocyclic group, they may be a divalent oxygen heterocyclic group, preferably of 4 to 6 carbon atoms, for example a tetrahydrofurylene group or a 3,4-dimethyltetrahydrofurylene group. Preferably, the groups R⁴, R⁹, and R¹² respectively denote groups of formulae II, III and IV as hereinbefore defined.

The values of a, b and c may be the same or different and may be, for example, from 0 to 8, preferably 0 to 5. In especially preferred embodiments a is 0 and b and c are each 1. When a, b, or c denote 0, R⁴, R⁹ and R¹² respectively denote a carbon-carbon single bond. The value of x may be, for example, from 0 to 20,000, preferably 0 to 10,000, more preferably 1 to 1000, especially 1 to 100. The value of y may be, for example, from 0 to 20,000, preferably 0 to 10,000, more preferably 1 to 1000, especially 1 to 100.

Polymers of formula I may have a number average molecular weight Mₙ ranging, for example, from 500 to 500,000, preferably from 500 to 100,000, more preferably from 500 to 10,000, especially from 1000 to 5000.

In preferred polymers of formula I, at least one of the x symbols A or the x symbols B denote a group -COOM and x is at least 1. In certain preferred polymers, 20-100% of the x symbols B denote a group -COOM, 80 to 0% of the x pairs A and B together denote a single bond, 0 to 100% of the y symbols X or Y denote a group -COOM and 100 to 0% of the y pairs X and Y together denote a single bond. These preferred polymers of formula I include those where 60 to 100%, especially 70 to 100%, of the x symbols B denote a -COOM group and 0 to 10%, especially 0%, of the y symbols X or Y denote a -COOM group. Other preferred polymers of formula I include those where 10 to 80%, especially 20 to 70%, of the x symbols B denote a group -COOM and 30 to 100%, especially 40 to 100%, of the y symbols X or Y denote a group -COOM. Further preferred polymers of formula I are 100% hydrocarboxylated polymers, i.e. those where each of the x symbols B denote -COOM and each of the y symbols X or Y denote -COOM.

Especially preferred polymers of formula I are polybutadienes of formula I where at least one of the x symbols A or the x symbols B denote a group -COOM, R⁵ and R¹³ each independently denote hydrogen, phenyl, hydroxyl or -COOM; R¹, R², R³, R⁶, R⁷, R⁸, R¹⁰ and R¹¹ each denote hydrogen; R⁴ denotes a carbon-carbon single bond; R⁹ and R¹² each denote a -CH₂ group; and x and y each denote 1 to 100. Specific preferred such polybutadienes are those having a number average molecular weight Mₙ of 500 to 10,000, particularly 1000 to 5000.

The polymers of formula I may be present in the aqueous compositions as carboxylic acids or as water-soluble salts thereof. The polymers are usually prepared as the carboxylic acids and, where necessary, a water-soluble base is added to the aqueous composition in sufficient amount to effect dissolution of the polymers. Thus, in formula I, M may denote a hydrogen atom, an alkali metal ion such as a lithium, sodium or potassium ion, an ammonium ion, an amine ion derived from a hydroxyl-containing amine, particularly a tertiary amine such as triethanolamine, or a tetralkylammonium ion. Preferably M denotes a hydrogen atom or a sodium or potassium ion or, in a partially neutralized polymer, part of the M groups denote hydrogen and part denote a sodium or potassium ion.

Polymers of formula I may be prepared by reactions on unsaturated polymeric starting materials of formula V 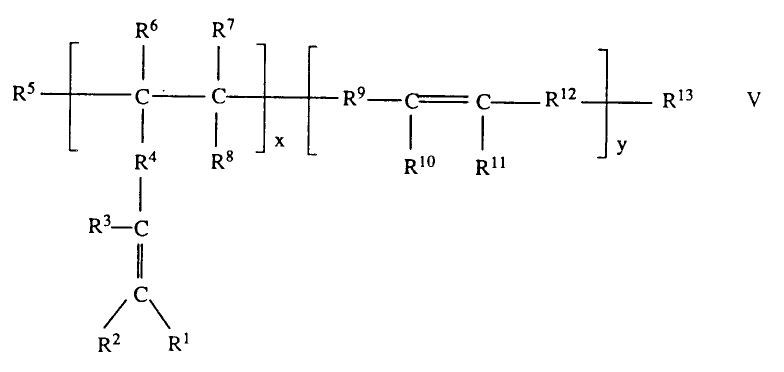
where R¹ to R¹³, x and y are as hereinbefore defined and the double bonds are in the cis or trans configuration.

Thus a polymer of formula V may be subjected to hydrocarboxylation or, in any order, to hydrocarboxylation and one or more reactions selected from hydrogenation, hydroformylation and epoxidation. Hydrocarboxylation and hydroformylation are addition reactions at a double bond of a polymer of formula V which introduce hydrogen and, respectively, -COOH, or -CHO into the polymer. Epoxidation converts double bonds into epoxide groups. For polymers of formula I where M is other than H, some or all of the -COOH groups may be neutralized with, for example, an alkali metal hydroxide, aqueous ammonia, an amine or a quaternary ammonium hydroxide.

Hydrocarboxylation, hydroformylation and epoxidation are preferably carried out in the presence of a homogeneous catalyst. Hydrogenation may be effected using a homogeneous or a heterogeneous catalyst. Epoxidation can be carried out without a catalyst by reacting the polymer of formula V with a percarboxylic acid such as peroxyacetic acid.

Where the reactions do not fully convert all of the double bonds of the polymers of formula V, the reaction products may contain some residual unsaturation (products of formula I where at least one of the x pairs A and B together denote a single bond or one of the y pairs X and Y together denote a single bond).

Reaction conditions and, particularly, the nature of the catalyst may be adjusted to give selectivity in double bond substitution. For example, the polymer of formula V may be reacted to give carboxyl substitution only on the pendant double bond(s). The remaining double bond(s) in the polymer backbone may then be reacted to introduce groups X and Y.

Starting materials of formula V may be prepared by homopolymerizing or co-polymerizing dienes or higher functional polyenes, or by ring-opening metathesis polymerization of cyclic olefins, or by homopolymerizing or copolymerizing acetylenes.

Non-limiting examples of dienes which may be polymerized to give starting materials of formula V are: 1,3 butadiene; 2,3 dimethyl-1,3-butadiene; 1,4-diphenyl; 1,3-butadiene; 2-methyl-1,3-butadiene (isoprene); 2-chloro-1,3-butadiene (chloroprene); 1,4-pentadiene; 2,4-dimethyl-1,3-pentadiene; 2-methyl-1,3-pentadiene; 1,3-hexadiene; 1,4-hexadiene; 1,5-hexadiene; 2,4-hexadiene; 2,5-dimethyl-2,4-hexadiene; 1,7-octadiene and 1,9-decadiene. Where the diene is 1,3-butadiene or a derivative thereof, polymerization may be performed to give either 1,2-polybutadiene or 1,4-polybutadiene or a mixture of the 1,2 and 1,4 polymers.

Non-limiting examples of cyclic olefins which may be used are cyclopentene, cyclooctene, cyclooctadiene, norbornene and 7-oxabicyclo[2.2.1]hept-5-ene.

Non-limiting examples of acetylenes which may be homopolymerized or copolymerized to give starting polymers of formula V are acetylene dicarboxylic acid, 2-butyne-1,4-diol, 1-hexyne, phenylacetylene, propargyl alcohol and propiolic acid.

Ethylenically unsaturated materials which may be copolymerized with dienes, polyenes or acetylenes to give polymers of formula V include, for example, unsaturated carboxylic acids or anhydrides or esters thereof, for example acrylic acid, methacrylic acid, itaconic acid, maleic anhydride, ethyl acrylate, methyl methacrylate, n-butyl acrylate and 2-ethylhexyl methacrylate, unsaturated hydrocarbons such as styrene, 1-decene or 1-octene, or vinyl esters such as vinyl acetate.

Preferably, the polymer of formula V is a polymer, especially a homopolymer, of 1,3-butadiene or isoprene.

The polymer of formula V may be reacted with carbon monoxide and water to effect hydrocarboxylation, with hydrogen to effect hydrogenation, with carbon monoxide and hydrogen to effect hydroformylation and with a peroxide such as tert.butyl hydroperoxide to effect epoxidation. These reactions may be carried out over a wide range of temperatures and pressures and in various solvents, as in conventional catalyst-promoted reactions on unsaturated materials. The reaction temperature may be, for example, from 0 to 200^{o}C, preferably from 10 to 120^{o}C. The reaction may be carried out at pressures from 1 to 500 atmospheres. Suitable solvents in which the reaction may be carried out include ketones and ethers such as acetone, methyl ethyl ketone and, preferably, methyl isobutyl ketone and tetrahydrofuran.

Homogeneous catalysts suitable for use in the present invention may be chosen from the large number of transition metal compounds known as homogeneous catalysts according to the nature of the reaction and the degree of selectivity required. Suitable transition metal compounds include those of chromium, iron, cobalt, ruthenium, iridium, platinum, molybdenum and, preferably, those of palladium, rhodium and nickel. They may be used together with co-catalysts such as copper, tin and zinc salts, preferably halides.

Examples of suitable catalysts for hydrocarboxylation and hydroformylation are cobalt and nickel carbonyl complexes such as Co₂ (CO)₈ and Ni(CO)₄ which generally require the use of high temperatures and pressures; rhodium complexes, including Rh₆(CO)₁₆, RhCl₃ 3H₂O, RhCl(PPh₃)₃ and Rh₂Cl₂(CO)₄; palladium compounds such as palladium (II) chloride or palladium (II) acetate together with a triarylphosphine, a triaryl phosphite or a triarylarsine, or preformed complexes of palladium (II) chloride with such a phosphine, phosphite or arsine, the palladium compound or complex optionally being used together with a co-catalyst such as SnCl₂, CuCl₂, SnI₂, GeCl₂ or PbCl₂; platinum complexes such as H₂PtCl₆ (optionally together with SnCl₂), PtCl₂(AsPh₃)₂, PtCl₂(AsClPh₂)₂ or PtCl₂ [P(OPh)₃]₂; and nickel complexes and mixtures thereof with zinc halides, such as mixtures of Ni[P(OPh)₃]₄ and ZnCl₂. For epoxidation reactions, any of the known homogeneous catalysts can be used. Where selective epoxidation of backbone double bonds is required, a particularly suitable catalyst is MoO₂Cl₂L where L is [(lR)-endo]-(+)-3-(diethoxyphosphonyl) camphor (see M. Gahagan, A. Iraqi, D.C. Cupertino, R.K. Mackie and D.J. Cole-Hamilton, J. Chem. Soc., Chem-Commun., 1989, 1688). For hydrogenation reactions, any of the homogeneous or heterogeneous catalysts conventionally used for such reactions can be used. Further homogeneous catalysts are described by A. Spencer in Comprehensive Coordination Chemistry, Eds. Wilkinson, Gillard and McClaverty, Pergamon, Oxford 1987, Volume 6, Chapter 61.2, p.267ff and the references cited therein. A catalyst promoter may be used with the catalyst to improve the selectivity of the catalyzed reaction. For example, iodide promoters such as hydriodic acid or methyl ioxide may be used with rhodium complexes.

Especially preferred homogeneous catalysts are bis(triphenylphosphine) palladium (II) chloride together with tin (II) chloride, which mixture is particularly useful for effecting selective hydrocarboxylation of pendant double bonds, to attach a carboxyl group only to the carbon atom linked to R¹ and R² in formula V and palladium (II) chloride together with cupric chloride, which mixture is useful for effecting hydrocarboxylation of both pendant and backbone double bonds, and bis(triphenylphosphine) palladium (II) chloride with triphenylphosphine, which mixture also catalyses hydrocarboxylation of both pendant and backbone double bonds. By hydrocarboxylating a polymer of formula V sequentially, firstly in the presence of bis(triphenylphosphine) palladium (II) chloride and tin chloride and then in the presence of bis(triphenylphosphine) palladium (II) chloride and triphenylphosphine, substantially complete hydrocarboxylation of all double bonds may be achieved.

In the aqueous compositions of the invention, the polymer of formula I may be present in an amount of 0.1 to 500,000 ppm, for example 1 to 100,000 ppm, by weight of the aqueous medium. The polymer may be included in the aqueous composition as a scale inhibitor, a corrosion inhibitor or dispersant to offset the effects of inorganic salts in the aqueous medium. The polymer may be present in the aqueous composition to treat wood to inhibit the penetration of water into wood. Accordingly, the present invention also provides an aqueous composition as hereinbefore described in contact with a surface of metal or wood.

The invention further provides a method of treating an aqueous medium to inhibit the deposition of scale therefrom, to inhibit the corrosion of a metal surface in contact with the aqueous medium, or to aid dispersion of finely divided particles in the aqueous medium, which method comprises adding to the aqueous medium a polymer of formula I as hereinbefore described in an amount of 0.1 to 500,000 ppm by weight.

When the polymer is used as a scale inhibitor, corrosion inhibitor, or dispersant, it is preferably present in an amount of 1 to 1000 ppm, especially 1 to 100 ppm, by weight of the aqueous medium.

In accordance with the invention, the aqueous medium to which a polymer of formula I is added as a scale inhibitor, corrosion inhibitor or dispersant may be, for example, water in cooling systems, steam-generating systems, sea-water evaporators, bottle washing plants, sugar evaporator equipment, gas scrubbing systems, flue gas desulphurization systems, closed circuit heating systems, refrigeration systems, reverse osmosis equipment, oil production and drilling systems, oil refineries, soil irrigation systems, waste treatment plants, crystallizers, metal recovery systems and photographic developing baths.

The polymers of formula I may be used alone or in conjunction with other compounds known to be useful in the treatment of aqueous systems. In the treatment of systems such as cooling water systems, air-conditioning systems, steam-generating systems, sea-water evaporator systems, hydrostatic cookers, and closed circuit heating or refrigerant systems, corrosion inhibitors may be used such as, for example, water soluble zinc salts; phosphates; polyphosphates; phosphonic acids and their salts, for example, hydroxyethyl diphosphonic acid (HEDP), nitrilotris methylene phosphonic acid and methylamino dimethylene phosphonocarboxylic acids and their salts, for example, those described in German Offenlegungsschrift 2632774, hydroxyphosphonoacetic acid, 2-phosphonobutane-1,2,4-tri-carboxylic acid and those disclosed in GB 1572406; nitrates, for example, sodium nitrate; nitrites, e.g. sodium nitrite; molybdates, e.g. sodium molybdate; tungstates; silicates, e.g. sodium silicate; benzotriazole, bis-benzotriazole or copper deactivating benzotriazole or tolutriazole derivatives or their Mannich base derivatives, mercaptobenzotriazole; N-acyl sarcosines; N-acylimino diacetic acids; ethanolamines; fatty amines; and polycarboxylic acids, for example, polymaleic acid, polyacrylic acid, and alkali metal salts thereof, copolymers of maleic anhydride, e.g. copolymers of maleic anhydride and sulfonated styrene, copolymers of acrylic acid, e.g. copolymers of acrylic acid and hydroxyalkylated acrylic acid, and substituted derivatives of polymaleic and polyacrylic acids and their copolymers. Moreover, in such systems, the polymer used according to the invention may be used in conjunction with further dispersing and/or threshold agents, e.g. polymerized acrylic acid (or its salts,) phosphino-polycarboxylic acids (as described and claimed in British Patent 1458235), the cotelomeric compounds described in European Patent Application No. 0150706, hydrolyzed polyacrylonitrile, polymerized methacrylic acid and its salts, polyacrylamide and copolymers thereof from acrylic and methacrylic acids, lignin sulphonic acid and its salts, tannin, naphthalene sulphonic acid/formaldehyde condensation products, starch and its derivatives, cellulose, acrylic acid/lower alkyl hydroxy-acrylate copolymers, e.g. those described in US Patent Specification No. 4029577, styrene/maleic anhydride copolymers and sulfonated styrene homopolymers, e.g. those described in US Patent Specification No. 4374733 and combinations thereof. Specific threshold agents, such as for example, 2-phosphono-butane-1,2,4-tri-carboxylic acid (PBSAM), hydroxyethyl diphosphonic acid (HEDP), alkyl phosphonic acids, hydroxyphosphonoacetic acid, 1-aminoalkyl-1,1-diphosphonic acids and their salts, and alkali metal polyphosphates, may also be used.

Particularly interesting additive packages are those comprising polymers of formula I with one or more of polymaleic acid or copolymers thereof, especially terpolymers with ethyl acrylate and vinyl acetate, polyacrylic acid or copolymers thereof, or substituted copolymers, hydroxyphosphonoacetic acid, HEDP, PBSAM, triazoles such as tolutriazole, molybdates and nitrites.

Precipitating agents such as alkali metal orthophosphates and carbonates; oxygen scavengers such as alkali metal sulphites and hydrazines; sequestering agents such as nitrilotriacetic acid and its salts; antifoaming agents such as silicones, e.g. polydimethylsiloxanes, distearylsebacamide, distearyl adipamide and related products derived from ethylene oxide and/or propylene oxide condensations, in addition to fatty alcohols, such as capryl alcohols and their ethylene oxide condensates; and biocides, e.g. amines, quaternary ammonium compounds, chlorophenols, sulphur-containing compounds such as sulphones, methylene bis thiocyanates and carbamates, isothiazolones, brominated propionamides, triazines, phosphonium compounds, chlorine and chlorine-release agents and organometallic compounds such as tributyl tin oxide, may be used together with polymers of formula I.

The invention also provides a method of treating wood to inhibit prenetration of water into the wood which comprises immersing the wood in an aqueous composition as hereinbefore defined. When used for such wood treatment, the aqueous composition preferably contains the polymer of formula I in an amount of 1,000 to 500,000 ppm, especially 20,000 to 100,000 ppm, by weight of the aqueous medium. The presence of the polymer prevents water penetration of the wood during continuous contact for periods of a year or more.

The invention is illustrated by the following Examples, in which parts are by weight unless indicated otherwise.

Polymers used in the Examples are prepared as described below.

The starting polybutadienes are freed from peroxide by pretreatment with ferrous ammonium sulphate as follows:
The polybutadiene (0.2 part) is dissolved in methyl isobutyl ketone (10 parts). To the solution obtained is added an equal amount of a freshly prepared saturated solution of ferrous ammonium sulphate in lM aqueous sulphuric acid. The mixture is shaken and separated in a separating funnel. The organic phase containing the peroxide-free polybutadiene is used directly to prepare polymers I to III.

Bis(triphenylphosphine) palladium (II) chloride (PdCl₂(PPh₃)₂, (0.05g, 7.12 x 10⁻⁵ mole) and tin (II) chloride dihydrate (0.19g, 1.0 x 10⁻³ mole) are added to a nitrogen - saturated mixture of methylisobutyl ketone (10 ml) containing water (0.5 ml) and polybutadiene (0.2g,) in a glass vessel. The mixture is stirred for 2-5 minutes to dissolve the catalyst. If necessary the contents are slightly warmed to dissolve the catalyst. The glass vessel is placed in an autoclave. The autoclave is deoxygenated with nitrogen, flushed three or four times with carbon monoxide at 20-30 atmospheres (2.03 MPa - 3.04 MPa) and finally pressurized to 80 atmospheres (8.11 MPa) with carbon monoxide and sealed. It is heated at 90^{o}C for 4 hours.

After the reaction the apparatus is allowed to cool and the pale reddish brown liquid is recovered. The solvent is evaporated in a rotary evaporator and the residue dissolved in 2M NaOH(20ml). The product is then precipitated by adding an equal amount of 7M aqueous hydrochloric acid in portions, separated and dissolved in acetone (20 ml). Magnesium sulphate is added to remove any water present in the acetone solution. The resulting solution is filtered and evaporated to dryness under vacuum.

Polymer I is prepared by the above procedure from a polybutadiene having 98% unsaturation (84% pendant vinyl, 14% backbone trans 1, 4) and a Mₙ of 3000, all of the pendant vinyl groups but none of the backbone double bonds being hydrocarboxylated.

Polymer II is prepared by the above procedure from a polybutadiene having 97% unsaturation (88% pendant vinyl, 9% backbone trans 1, 4) and a Mₙ of 3000, the product having 78.3% pendant carboxyl groups, 9.7% pendant vinyl double bonds and 9% backbone double bonds.

Polymer III is prepared by the above procedure from a polybutadiene having 84% unsaturation (53% pendant vinyl; 12% backbone cis l, 4; 19% backbone trans 1, 4) and a Mₙ of 1,000, all of the pendant vinyl groups but none of the backbone double bonds being hydrocarboxylated.

The percentage double bond contents are based on the theoretical number of double bonds in the polybutadienes. The actual number is less than the theoretical number because some of the double bonds are hydrogenated during polymerization of butadiene.

### Examples 1-2

Polymers I and II are tested as corrosion inhibitors by a rotating coupon test in the following corrosive water:

| | |
|---|---|
| pH | 8.4 |
| Total Alkalinity (ppm) | 350 |
| Total Hardness (ppm) | 225 |
| Ca² (ppm) 150 | |
| Mg² (ppm) 75 | |
| Cl⁻ (ppm) | 200 |
| SO₄²⁻ (ppm) | 200 |

In a 1 liter reservoir of the test water, two pre-cleaned and pre-weighed mild steel coupons are rotated at a coupon velocity of 61 centimeters per second. The test is conducted over 48 hours in oxygenated water at 40^{o}C using 20 ppm of the appropriate concentration of corrosion inhibitor.

The coupons are removed, scrubbed, immersed for one minute in hydrochloric acid inhibited with 1% by weight of hexamine and then rinsed, dried and reweighed. A certain loss in weight will have occurred. A blank test i.e. immersion of mild steel specimen in the test water in the absence of any potential corrosion inhibitor, is carried out with each series of tests. The corrosion rates are calculated in milligrams of weight loss/sq. decimeter/day (m.d.d.). The results obtained in a series of tests are set out in the following Table.

| Example | Corrosion inhibitor | Concentration (ppm) | Corrosion rate (m.d.d.) |
|---|---|---|---|
| - | Blank | - | 197 |
| 1 | Polymer I | 20 | 9.6 |
| 2 | Polymer II | 20 | 32.9 |

### Example 3

A sample of Polymer III (0.5 g) is suspended in water (10 ml) and 2M aqueous sodium hydroxide is added dropwise until all of the polymer dissolves, with the pH being kept at 7.0. Three pieces of dry balsa wood (30 cm x 0.3 cm x 0.3 cm) are soaked in water for 43 hours, during which time the water is shown by n.m.r. imaging to have penetrated 0.2 mm all around. The three pieces of balsa wood are then placed in the aqueous polymer solution described above. After 14 days, n.m.r. imaging indicates that no further water has penetrated into the wood, and the wood is still floating. After 5 weeks, n.m.r. (nuclear magnetic resonance) imaging again shows that no further water has penetrated the wood. After one year, n.m.r. imaging again shows that no further water has penetrated the wood and the wood is still floating.

## Claims

1. An aqueous composition characterized by a solution in an aqueous medium of 0.1 to 500,000 ppm by weight of a polymer of formula I 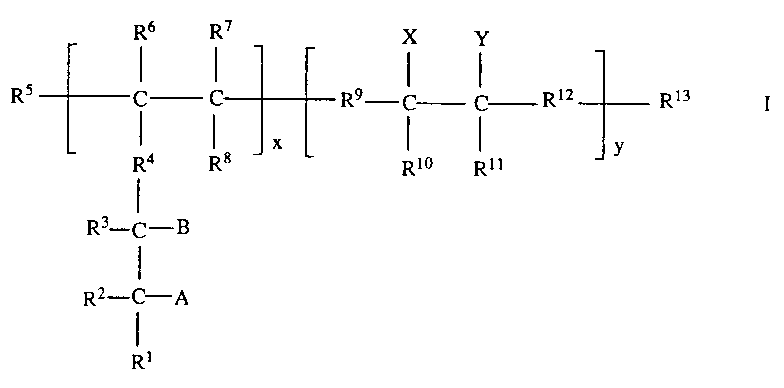 where R¹, R², R³, R⁵, R⁶, R⁷, R⁸, R¹⁰, R¹¹ and R¹³ each independently denote a hydrogen atom, C₁ to C₁₀ alkyl, phenyl, halogen, hydroxyl or a group -COOM;
R⁴ denotes a divalent group of formula II 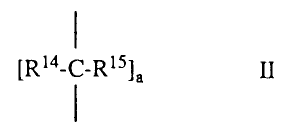 or a divalent cycloaliphatic or heterocyclic group of 3 to 10 carbon atoms:
R⁹ denotes a divalent group of formula III 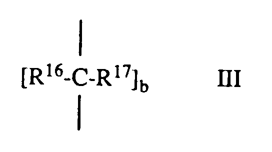 or a divalent cycloaliphatic or heterocyclic group of 3 to 10 carbon atoms;
R¹² denotes a divalent group of formula IV 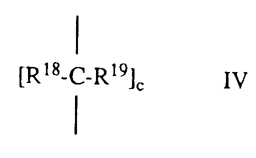 or a divalent cycloaliphatic or heterocyclic group of 3 to 10 carbon atoms;
R¹⁴, R¹⁵, R¹⁶, R¹⁷, R¹⁸ and R¹⁹ each independently denote a hydrogen atom, C₁ to C₁₀ alkyl, phenyl, halogen, hydroxyl, a group -COOM, C₁ to C₁₀ alkoxycarbonyl, C₁ to C₁₀ hydroxyalkoxycarbonyl or C₁ to C₁₀ alkylcarbonyloxy; or R¹⁴ and R¹⁵ alternatively independently denote phenyl;
one of A and B denotes a hydrogen atom and the other denotes a hydrogen atom, -COOM or -CHO or A and B together with an oxygen atom form an epoxide ring or A and B together denote a single bond; one of X and Y denotes a hydrogen atom and the other denotes a hydrogen atom, -COOM or -CHO or X and Y together with an oxygen atom form an epoxide ring or X and Y together denote a single bond;
M denotes a hydrogen atom, an alkali metal ion, an ammonium ion or an amine ion; a, b and c are the same or different and are each integers from 0 to 10; and x and y are the same or different and are each integers from 0 to 50,000, such that x + y is at least 3; with the provisos that the polymer contains at least one group -COOM and is not a homopolymer of acrylic acid or methacrylic acid or a copolymer of acrylic acid or methacrylic acid with an ethylenically unsaturated monomer.

2. A composition according to claim 1, characterized in that the divalent groups R⁴, R⁹ and R¹² respectively denote groups of formulae II, III and IV as defined in claim 1.

3. A composition according to claim 1 or 2, characterized in that one or more of R¹ to R³, R⁵ to R⁸ and R¹⁰ to R¹⁹ denote or contain an alkyl or hydroxyalkyl group of 1 to 8 carbon atoms.

4. A composition according to claim 3, characterized in that R¹ to R³, R⁵ to R⁸ and R¹⁰ to R¹³ denote hydrogen, methyl, phenyl, hydroxyl or -COOM.

5. A composition according to claim 3 or 4, characterized in that R¹⁴ to R¹⁹ denote hydrogen, methyl, phenyl, -COOM, methoxycarbonyl, ethoxycarbonyl, n-butoxycarbonyl, 2-ethylhexyloxycarbonyl or methylcarbonyloxy.

6. A composition according to any of the preceding claims, characterized in that a, b and c are each from 0 to 5.

7. A composition according to claim 6, characterized in that a is 0 and b and c are each 1.

8. A composition according to any of the preceding claims, characterized in that x and y are each from 0 to 10,000.

9. A composition according to claim 8, characterized in that x and y are each from 1 to 1000.

10. A composition according to claim 9, characterized in that x and y are each from 1 to 100.

11. A composition according to any of the preceding claims, characterized in that the polymer of formula I has a number average molecular weight Mₙ of 500 to 100,000.

12. A composition according to claim 11, characterized in that Mₙ is 500 to 10,000.

13. A composition according to claim 12, characterized in that Mₙ is 1000 to 5000.

14. A composition according to any of the preceding claims, characterized in that at least one of the x symbols A or the x symbols B denote a group -COOM and x is at least 1.

15. A composition according to any of the preceding claims, characterized in that 20 to 100% of the x symbols B denote a group -COOM, 80 to 0% of the x pairs A and B together denote a single bond, 0 to 100% of the y symbols X or y denote a group -COOM and 100 to 0% of the y pairs X and Y together denote a single bond.

16. A composition according to claim 15, characterized in that 60 to 100% of the x symbols B denote a group -COOM and 0 to 10% of the y symbols X or Y denote a group -COOM.

17. A composition according to claim 15, characterized in that 10 to 80% of the x symbols B denote a group -COOM and 30 to 100% of the y symbols X or Y denote a group -COOM.

18. A composition according to any of the preceding claims, characterized in that it is a polybutadiene of formula I where R⁵ and R¹³ each independently denote hydrogen, phenyl, hydroxyl or -COOM; R¹, R², R³, R⁶, R⁷, R⁸, R¹⁰ and R¹¹ each denote hydrogen; R⁴ denotes a carbon-carbon single bond; R⁹ and R¹² each denote a -CH₂- group; and x and y each denote 1 to 100.

19. A composition according to any of the preceding claims, characterized in that M denotes a hydrogen atom or a sodium or potassium ion.

20. A composition according to any of the preceding claims, characterized in that the polymer of formula I is present in an amount of 1 to 100,000 ppm by weight of the aqueous medium.

21. A composition according to any of the preceding claims in contact with a surface of metal or wood.

22. A composition according to claim 20 or 21, characterized in that the polymer is present as a scale inhibitor, or corrosion inhibitor or dispersant in an amount of 1 to 1000 ppm by weight of the aqueous medium.

23. A composition according to claim 22, characterized in that the polymer is present in an amount of 1 to 100 ppm by weight of the aqueous medium.

24. A composition according to any of claims 1 to 19 suitable for use in the treatment of wood to inhibit penetration of water into the wood, characterized in that the polymer is present in an amount of 1,000 to 500,000 ppm by weight of the aqueous medium.

25. A composition according to claim 24, characterized in that the polymer is present in an amount of 20,000 to 100,000 ppm by weight of the aqueous medium.

26. A method of treating wood to inhibit penetration of water into the wood characterized by immersing the wood in an aqueous composition according to any of claims 1 to 20, 24 or 25.

27. A method of treating an aqueous medium to inhibit deposition of scale therefrom, to inhibit corrosion of a metal surface in contact with the aqueous medium or to aid dispersion of finely divided particles in the aqueous medium, characterized by adding to the aqueous medium a polymer of formula I as defined in claim 1 in an amount of 0.1 to 500,000 ppm by weight.

28. A method according to claim 27, characterized in that the amount of polymer is as specified in any of claims 20, 22 or 23.
